# EUROPÄISCHE PATENTSCHRIFT

(11) **EP 0 995 938 B1**
(45) Veröffentlichungstag und Bekanntmachung des Hinweises auf die Patenterteilung: **23.03.2005**
(21) Anmeldenummer: 99116013.6
(22) Anmeldetag: 14.08.1999
(51) Int. Cl.: F16L 37/04, F16L 37/02

(54) **Dichtung für eine Steckverbindung**
Seal for a pin-and-socket coupling
Joint d'étancheite pour raccord enfichable

(30) Priorität: 20.10.1998 DE 19848213
(43) Veröffentlichungstag der Anmeldung: 26.04.2000
(73) Patentinhaber: ZF Sachs AG, 97424 Schweinfurt (DE)
(72) Erfinder: Grosspietsch, Wolfgang, Dipl.-Ing.(FH), 97422 Schweinfurt (DE); Pagels, Olaf, 97493 Bergrheinfeld (DE); Otto, Martin, Dipl.-Ing., 97072 Würzburg (DE); Stampf, Volker, Dipl.-Ing., 97422 Schweinfurt (DE); Riess, Thomas, Dipl.-Ing.(FH), 96179 Mürsbach (DE); Gebauer, Dieter, Dipl.-Ing.(FH), 97505 Geldersheim (DE); Ebert, Angelika, 97421 Schweinfurt (DE)

(56) Entgegenhaltungen:
- DE-A- 3 531 926
- DE-C- 19 714 801
- DE-U- 7 830 401

## Beschreibung

Die Erfindung bezieht sich auf eine Steckkupplung gemäß dem Oberbegriff des Anspruchs 1.

Mit der DE 197 14 801 C1 ist ein elastisches Dichtelement für eine hydraulische Steckverbindung bekannt geworden, welches an der Innenumfangsfläche ein Formprofil aufweist, das dem formschlüssigen Eingriff mit einem an der Außenumfangsfläche der Hülse ausgebildeten Formprofil dient, um das Dichtelement an der Hülse zu befestigen, während an der Außenumfangsfläche axial in dem Bereich des Formprofils mindestens eine Außendichtlippe ausgebildet ist, die im montierten Zustand der Steckverbindung an einer Innenumfangsfläche der Kupplung unter elastischer Verformung anliegt. Auf diese Weise soll eine bessere Handhabung der Steckarmatur bei der Montage der Steckverbindung sowie eine verbesserte Dichtwirkung des Dichtelements im Betrieb der Steckverbindung gewährleistet sein.

Es liegt auf der Hand, dass das elastische Dichtelement mit dem Formprofil der Hülse leicht montierbar ist, da zum Einschnappen des Formprofils des Dichtelementes dieses lediglich aufgedehnt werden muss. Auf der anderen Seite aber wird bei der Demontage klar, dass der Verband des Dichtelementes mit der Hülse nicht zwingend in ihrem Ursprungsfügezustand zu halten braucht, da beim Lösen des Steckverbandes die endseitige Hälfte des Dichtelementes in dem Gehäuse unter Vorspannung steckt, während der Fügeverband bereits aus der Vorspannung durch den zylindrischen Innendurchmesser des Außengehäuses entlassen ist. In diesem Fall kann sich das Dichtelement von der Hülse lösen, wobei das Dichtelement in dem Innendurchmesser des Gehäuses verbleibt, während die Hülse mit dem zu dichtenden Rohr nach außen weggezogen werden kann. Bei Wiedermontage durch ungeübte Hände wird der Fügeverband nicht mehr hergestellt und eine Abdichtung nicht mehr gewährleistet.

Dem gegenüber wird vorgeschlagen, dass eine gummielastische Dichtung ähnlich dem vorgenannten Dichtelement zur Abdichtung des Rohres in einem Einschubteil einer Steckkupplung gegen eine zylindrische Innenfläche eines Gehäuses dieser Steckkupplung derart abgedichtet wird, dass eine weiterentwickelte Formschlussverbindung die gummielastische Dichtung mit dem Einschubteil verbindet, wobei jedoch eine ringförmige Anformung an der gummielastischen Dichtung nicht mehr von außen über einen Bund gezogen, sondern von innen in eine Ringnut eingeschnappt wird. Durch die Montage des Rohres wird diese Fügeverbindung in der Weise verriegelt, dass die ringförmige Anformung des gummielastischen Dichtung nicht mehr aus ihrer Ringnut herausgezogen werden kann, und dass insbesondere bei häufiger Betätigung der Steckverbindung sich die gummielastische Dichtung nicht mehr von dem Einschubteil lösen kann. Zur Verbesserung dieser Verbindung kann durch die Gestaltung der Durchmesserverhältnisse an einer stegförmigen Anbindung in der ringförmigen Anformung sowie auch an dem Innendurchmesser des mit der stegförmigen Anbindung zusammenwirkenden Bundes eine Verquetschung erreicht werden, mit der die vorgenannte Verriegelung zusätzlich verbessert werden kann.

Es ist also die Aufgabe der Erfindung, eine Fügeverbindung zwischen einer gummielastischen Dichtung und einem Einschubteil einer Steckkupplung zu schaffen, die sich auch bei häufiger Betätigung der Steckverbindung nicht mehr selbsttätig lösen kann.

Die Lösung der Aufgabe ist in dem Kennzeichen des Hauptanspruches beschrieben. Ausgestaltungen sind den Unteransprüchen zu entnehmen.

Anhand mehrerer Beispiele wird eine Fügeverbindung einer gummielastischen Dichtung mit einem Einschubteil einer Steckkupplung dargestellt. Es zeigen:
- Fig. 1: einen Zusammenbau eines Einschubteils mit einer gummielastischen Dichtung unter Zuhilfenahme eines Montageringes;
- Fig. 2: die unter Fig. 1 beschriebene Anordnung mit einem Rohr, das durch die Dichtung gegen ein Gehäuse abgedichtet wird;
- Fig. 3: eine zur Mittelachse des Einschubteils senkrecht verlaufende Schnittebene mit Fehlstellen im Bereich einer Ringnut;
- Fig. 4: einen Zusammenbau des unter Fig. 3 gezeigten Einschubteils mit der Dichtung und dem Rohr;
- Fig. 5: eine herstellungstechnische Abwandlung zu dem Einschubteil gemäß Fig. 3 im Schnitt;
- Fig. 6: die Anordnung des Einschubteils, der Dichtung und des Rohres im Zusammenbau gemäß Fig. 5;
- Fig. 7: einen Zusammenbau eines entlang der Mittelachse verlaufenden Ebene zweigeteilten Einschubteils mit der Dichtung;
- Fig. 8: eine senkrecht zur Mittelachse verlaufende Schnittebene durch das Einschubteil gemäß Fig. 7 mit Haltenasen;
- Fig. 9: ein Einschubteil, welches aus zwei Hälften besteht, die einseitig mit mindestens einem Filmscharnier verbunden sind;
- Fig. 10: eine Hälfte des Einschubteils gemäß den Fig. 8 oder 9 mit der Darstellung einer leicht formbaren Ringnut;
- Fig. 11: ein Einschubteil mit einer Dichtung, wobei Schrägen an beiden Teilen zur Montageverbesserung angeordnet sind.

Wird mit 1 eine Steckkupplung zur Abdichtung eines Rohres 2 in einem Gehäuse G bezeichnet, so liegt das Ende des Rohres 2 in einem Einschubteil 3a, mit welchem eine Dichtung 11 verbunden ist, um eine Abdichtung gegen den Innendurchmesser des Gehäuses G herzustellen. Das Einschubteil 3a bildet somit mit der Dichtung 11 und dem Rohr 2 einen Zusammenbau, der als solcher in das Gehäuse G zum Zwecke der Abdichtung eingeschoben wird. Die gummielastische Dichtung 11 weist an ihrem Außendurchmesser eine nach außen weisende Ringlippe 15 auf, die unter Vorspannung mit dem Innendurchmesser einer Bohrung des Gehäuses G unter Vorspannung steht, während mindestens eine nach radial innen weisende ringförmige Dichtlippe 14 am Innendurchmesser der Dichtung 11 unter Vorspannung mit dem Außendurchmesser des Rohres 2 liegt. Die Dichtung 11 wird somit unter Verformung in einen Ringspalt eingedrückt, wobei sich eine elastische Verformung zugunsten einer Abdichtung dieses Ringspaltes ergibt.

In der in Richtung Einschubteil 3a weisenden Richtung weist die Dichtung 11 eine nach radial außen weisende ringförmige Anformung 12 auf, die über eine stegförmige Anbindung 19 mit der Dichtung 11 verbunden ist.

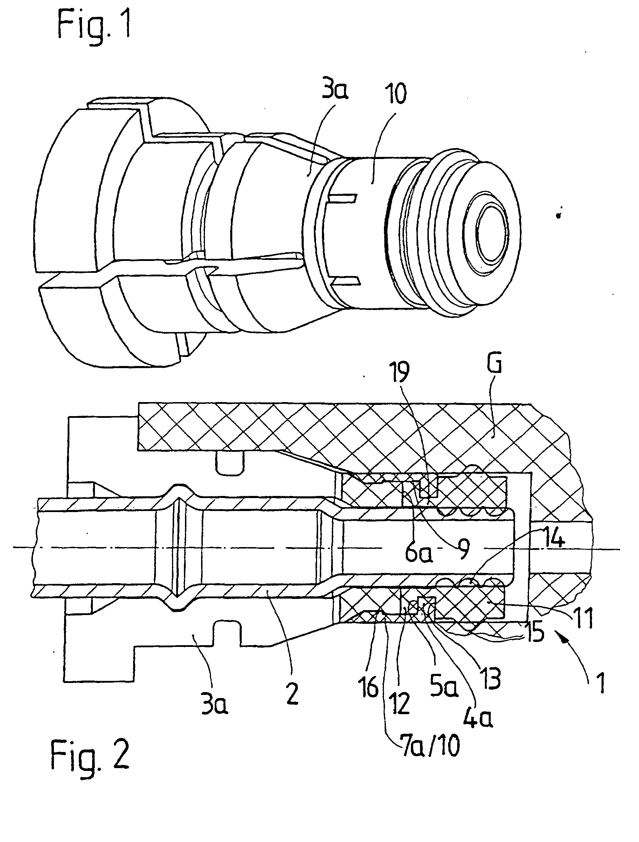

Gemäß den Figuren 1 und 2 hintergreift die nach radial außen weisende ringförmige Anformung 12 einen Bund 4a, welcher sich nach Montage der Dichtung 11 am Einschubteil 3a in eine über der stegförmigen Anbindung 19 ausgebildeten Ringnut 9 legt. Diese Ringnut 9 wird durch einen Montagering 10 gebildet, der stirnseitig am Einschubteil 3a befestigt ist und am Bund 4a eine ringförmig verlaufende erste Planfläche 5a bildet, die mit einer ringförmig verlaufenden zweiten Planfläche 6a diese Ringnut 9 bildet, wobei der Montagering 10 mit einer äußeren radialen Anbindung 7a die äußere Begrenzung dieser Ringnut 9 darstellt. Der Montagering 10 ist mit dem Einschubteil 3a unlösbar verbunden, so dass er sich auch unter Kraftanwendung nicht mehr von dem Einschubteil 3a abziehen lässt.

Hat man den Montagering 10 mit dem Einschubteil 3a verbunden, so kann die Dichtung 11 mit ihrer nach radial außen weisenden ringförmigen Anformung 12 in die Ringnut 9 von innen gefügt werden. Die beiden derart montierten Teile 11 und 3a lassen sich jedoch durch eine axial trennende Kraft wieder voneinander lösen, da die Anformung 12 sich ab einer bestimmten Zugkraft wieder aus der Ringnut 9 herausziehen lässt, da die Elastizität des gummielastischen Materials keine ausreichende Befestigung bietet. Erst mit der Montage des Rohres 2, welches in das Einschubteil 3a und in die daran gefügte Dichtung 11 eingeschoben wird, ergibt sich eine Verriegelung der Fügestelle zwischen dem Einschubteil 3a und der Dichtung 11 dadurch, dass bei Anwendung einer Zugkraft sich die Anformung 12 nicht mehr aus der Ringnut 9 lösen kann, da das Ausweichen nach radial innen durch den nunmehr innen an der Dichtung 11 anliegenden Außendurchmesser des Rohres 2 verhindert wird. Um zu verhindern, dass sich der Montagering 10 von dem Einschubteil 3a löst, wird eine Schnappverbindung 16 vorgeschlagen, die eine Demontage des Montageringes nur durch Zerstörung oder aber mit Hilfe von Spezialwerkzeugen ermöglicht.

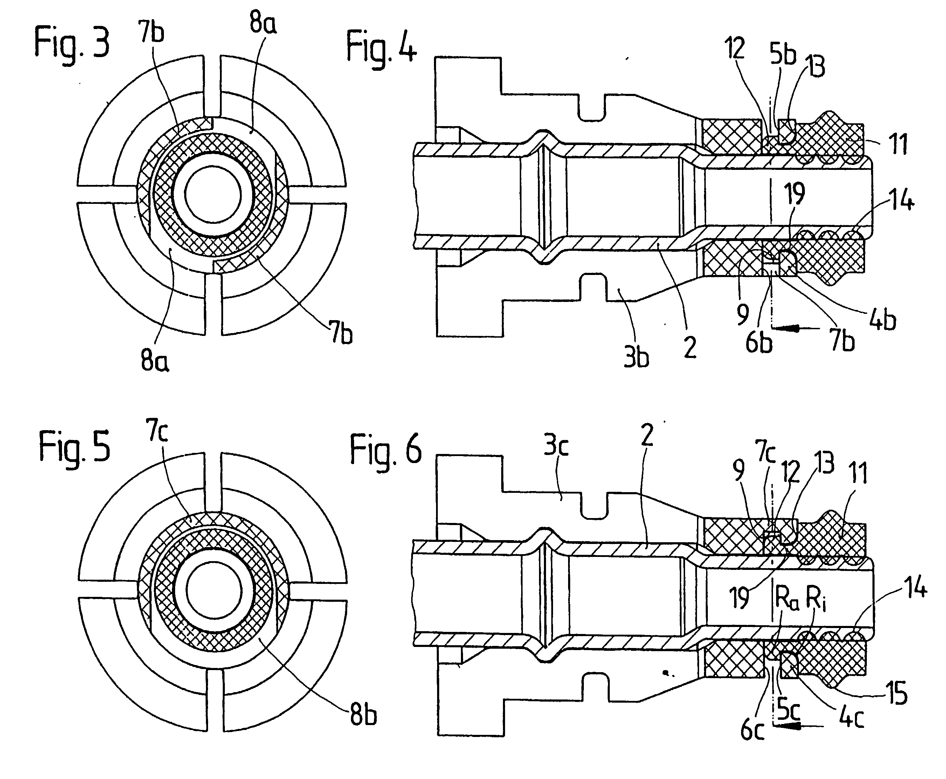

Gemäß den Figuren 3 und 4 wird ein Einschubteil 3b vorgeschlagen, welches mit einem Bund 4b und einer radial äußeren Anbindung 7b einteilig ausgeführt ist, wobei sich die Ringnut 9 an diesem einteilig ausgeführten Einschubteil 3b bei der Herstellung durch Anwendung des Spritzgießverfahrens durch nach außen verfahrbare Formschieber unter Ausbildung zweier ringförmig verlaufender Planflächen 5d und 6d ergibt, wobei eine radial äußere Anbindung 7b Fehlstellen 8a aufweist, die zur Entformung der nach radial außen verfahrbaren Formschieber unerlässlich sind. Eine auf diese Weise hergestellte Ausführung des Einschubteils 3b lässt eine unversehrte ringförmig verlaufende erste Planfläche 5d zu, wodurch die Haltekraft zwischen der Dichtung 11 und dem Einschubteil 3d gewährleistet ist, die bereits vorher mit Bezug auf die Figuren 1 und 2 beschrieben wurde. Die Ringnut 9 wird also von der ringförmig verlaufenden ersten Planfläche 5d und einer zweiten ebenfalls rundum unversehrt verlaufenden ringförmigen zweiten Planfläche 6b gebildet. Die Verriegelung der Fügestelle zwischen der Dichtung 11 und den Einschubteil 3b wird ebenfalls durch das Rohr 2 vorgenommen, welches in die beiden vormontierten Teile 3b und 11 eingeschoben wird.

Zur Verbesserung der Haltekraft wird noch eine zusätzliche Verquetschung der stegartigen Anbindung 19 dadurch vorgeschlagen, dass der nach radial innen weisende Bund 4b im Durchmesser kleiner ausgeführt wird als der Außendurchmesser der stegförmigen Anbindung 19, wodurch sich eine Ringfläche ergibt, die kleiner ist, als die Ringfläche der stegförmigen Anbindung, wodurch sich beim Einschieben des Rohres 2 eine zusätzliche Sicherung gegen Abziehen der Dichtung 11 vom Einschubteil 3b bildet. Diese Verquetschung kann generell für alle vorgeschlagenen Versionen dieser Erfindung gelten.

Während die eben beschriebene radial äußere Anbindung 7b zwei Fehlstellen 8a aufweist, welche dann entstehen, wenn man die Formschieber identisch ausbildet, wird gemäß Fig. 5 eine Fehlstelle 8b in einer radial äußeren Anbindung 7c eines Bundes 4c vorgeschlagen, die durch die einseitige Ausbildung eines Formschiebers zur Anbindung des Bundes 4c und zur Herstellung der zumindest halbseitig umlaufenden Ringnut 9 entsteht. Die Fehlstelle 8b in der Anbindung 7c ist größer als eine der Fehlstellen 8a in der Anbindung 7d gemäß den Figuren 3 und 4, hat aber auf die Ausbildung einer ringförmig verlaufenden ersten Planfläche 5c und deren Unversehrtheit sowie auf die Ausbildung einer ringförmig verlaufenden zweiten Planfläche 6c und deren Unversehrtheit keinen Einfluss, so dass die einwandfreie Fügung der Dichtung 11 an dem Einschubteil 3c ebenso durch die ausreichend große Ausbildung einer radial äußeren Anbindung 7c für den Bund 4c gewährleistet ist.

Das Einschubteil 3c hat an seiner Stirnseite gegen die Dichtung 11 eine ringförmig verlaufende Dichtfläche 13, die einen nach radial innen weisenden Radius Ri aufweist, der bei der Montage mit einem nach radial außen weisenden Radius Ra an der ringförmigen Anformung 12 an der Dichtung 11 in der Weise zusammenwirkt, dass sich die Dichtung 11 am Einschubteil 3c leichter fügen lässt, indem man die Dichtung 11 einfach radial gegen das Einschubteil 3c andrückt. Die Anformung 12 wird dadurch nach radial innen abgewiesen und schnappt zur Bildung einer hakenartigen, auch auf Zug belastbaren Fügeverbindung in die Ringnut 9 ein. Wie schon vorher beschrieben, wird diese Fügeverbindung durch das Einschieben des Rohres 2 in das Einschubteil 3 und die Dichtung 11 verriegelt.

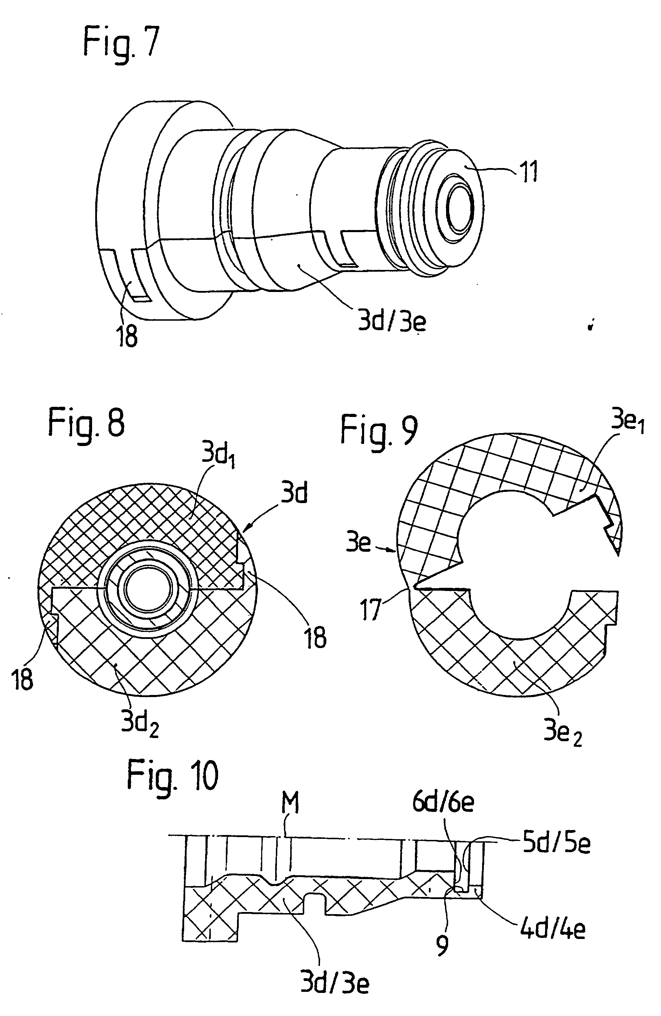

Gemäß Fig. 7 wird ein Einschubteil 3d/3e gezeigt, welches mit der Dichtung 11 ebenso wie die Einschubteile 3c bzw. 3b fügbar ist. Die Zweiteiligkeit des Einschubteils 3d wird durch eine Trennebene entlang einer Mittelachse M des Einschubteils 3d bewerkstelligt, wobei zwei identische Hälften 3d1 und 3d2 zur Einheit 3d zusammengefügt werden. Mit Haltenasen 18 wird ein ausreichend fester Fügeverband hergestellt, wobei die fertigungstechnisch schwierige Ringnut 9 nunmehr auf einfache Weise in einem zweigeteilten Werkzeug hergestellt werden kann. Das Einschubteil 3e ist ebenfalls zweiteilig in der Weise ausgeführt, dass eine erste Hälfte 3e1 mit einer zweiten Hälfte 3e2 über mindestens ein Filmscharnier 17 verbunden ist, wobei die gemäß Fig. 10 dargestellte Ringnut 9 durch ein ebenfalls zweiteiliges Werkzeug im voll aufgeklappten Zustand leicht herstellbar ist. Die Schließung der beiden Hälften 3e1 und 3e2 wird analog zu der zweigeteilten Ausführung des Einschubteils 3d über Halterasten bewerkstelligt.

Gemäß Fig. 10 ist die nunmehr einfach herzustellende Ringnut 9 mit unversehrt ausgeführten ringförmig verlaufenden ersten und zweiten Planflächen 5d,5e und 6d,6e herstellbar.

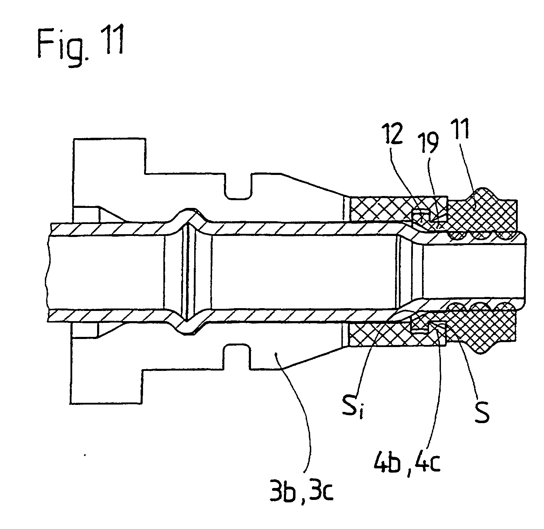

Schließlich ist gemäß Fig. 11 eine Fügeverbindung beschrieben, die sich besonders leicht mit dem Einschubteil 3b,3c durchführen lässt. Der Bund 4d,4c weist eine Schräge S auf, die bei der Montage der Dichtung 11 die Anformung 12 noch leichter abweist, als die Lösung gemäß Fig. 5 mit den Radien Ra,Ri. Die Montage wird erleichtert durch eine innere Schräge Si an der Dichtung 11, die das Zurückweichen der Anformung 12 beim Durchstecken des Bundes 4d, 4c bewirkt. Darüber hinaus wird das Einführen des Rohres 2 in das Einschubteil 3d,3c sowie in die Dichtung 11 mit der Schräge Si sicherer gemacht.

Alle hier vorgeschlagenen Lösungen haben den gemeinsamen Vorteil, dass sie eine einfach montierbare Fügestelle zwischen dem Einschubteil 3a,3b,3c,3d,3e und der Dichtung 11 aufweisen, die durch das Einschieben des Rohres 2 verriegelt werden kann, wobei mit bestimmten Durchmesseränderungen diese Verbindung noch eine zusätzliche Sicherung durch Verquetschen der stegförmigen Anbindung 19 erfährt.

## Patentansprüche

1. Steckkupplung mit einem Rohr (2), einem Einschubteil (3), einem Gehäuse (G) und einer gummielastischen Dichtung zur Abdichtung des Rohres (2) in dem Einschubteil (3) gegen eine zylindrische Innenfläche des Gehäuses (G) dieser Steckkupplung (1), in welches das Einschubteil (3a, 3b, 3c, 3d, 3e) zusammen mit dem Rohr (2) einschiebbar ist, wobei die Dichtung (11) mit mindestens einer nach außen weisenden Ringlippe (15) an der Innenfläche des Gehäuses und mit mindestens einer nach radial innen weisenden ringförmigen Dichtlippe (14) am Rohr (2) unter Vorspannung anliegt, wobei die gummielastische Dichtung (11) mit dem Einschubteil (3a,3b,3c,3d,3e) formschlüssig verbindbar ist und im Einschubteil ( 3a,3b,3c,3d,3e) eine nach innen weisende Ringnut (9) gebildet ist, in die eine nach radial außen weisende ringförmige Anformung (12) der Dichtung (11) zur Bildung einer Fügeverbindung mit hakenartigem Hintergriff eingreift, wobei dieser Formschluß durch die Montage des Rohres (2) zu einer nicht lösbaren Verbindung verriegelbar ist, wobei das Rohr (2) im Bereich der Dichtung (11) einen zylindrischen und nicht unterbrochenen Außendurchmesser aufweist.

2. Steckkupplung nach Anspruch 1,
**dadurch gekennzeichnet,**
**dass** zur Bildung der Ringnut (9) ein nach radial innen weisender Bund (4a,4b,4c,4d,4e) mit dem Einschubteil (3a,3b,3c,3d,3e) verbunden ist, welcher Bund eine ringförmig verlaufende erste Planfläche (5a,5b,5c,5d,5e) bildet, welche einer zweiten Planfläche (6a,6b,6c,6d,6e) gegenüberliegt und mit dieser die umlaufende, nach innen weisende Ringnut (9) bildet.

3. Steckkupplung nach Anspruch 1 oder 2,
**dadurch gekennzeichnet,**
**dass** die Ringnut (9) durch einen mit dem Einschubteil (3a) verbindbaren Montagering (10) gebildet wird, der eine ringförmig verlaufende erste Planfläche (5a) aufweist, die von einer Stirnfläche des Einschubteils (3a) als einer zweiten ringförmig verlaufenden Planfläche (6a) unter Bildung einer äußeren Anbindung (7a) einen Abstand bildet, der der Breite der Ringnut (9) entspricht.

4. Steckkupplung nach Anspruch 3, **dadurch gekennzeichnet,**
**dass** der Montagering (10) mit dem Einschubteil (3a) über eine Schnappverbindung (16) verbunden ist.

5. Verfahren zur Bildung einer Steckkupplung nach Anspruch 3, **gekennzeichnet durch** die folgenden Montageschritte:
◆ Fügen der Dichtung (11) mit einem Montagering (10) **durch** Einlegen der nach radial außen weisenden ringförmigen Anformung (12) hinter die ringförmig verlaufenden Planfläche (5a) der zu bildenden Ringnut (9);
◆ Einschnappen des Zusammenbaus aus Montagering (10) und Dichtung (11) am Einschubteil (3a);
◆ Einschieben des Rohres (2) in das Einschubteil (3a) und in die Dichtung (11) in die für das Rohr (2) vorgesehene Lage, zumindest aber bis an die Fügestelle zur Verriegelung der Fügeverbindung zwischen dem Montagering (10) und der Dichtung (11);

6. Steckkupplung nach Anspruch 1 oder 2,
**dadurch gekennzeichnet,**
**dass** die Ringnut (9) an dem einteilig ausgeführten Einschubteil (3b,3c) durch nach außen verfahrbare Formschieber unter Ausbildung der beiden ringförmig verlaufenden Planflächen (5b,6b;5c,6c) angeformt ist, wobei eine radial äußere Anbindung (7b,7c) des Bundes (4b,4c) durch mindestens eine Fehlstelle (8a,8b) unterbrochen ist;

7. Steckkupplung nach Anspruch 6,
**dadurch gekennzeichnet,**
**dass** der Bund (4b,4c) am Einschubteil (3b,3c) einen zur Stirnfläche des Einschubteils (3b,3c) hin sowie nach radial innen weisenden Radius (Ri) aufweist, der bei Montage mit einem nach radial außen weisenden Radius (Ra) an der ringförmigen Anformung (12) an der Dichtung (11) zusammenwirkt.

8. Steckkupplung nach Anspruch 6,
**dadurch gekennzeichnet,**
**dass** der Bund (4b',4c') am Einschubteil (3b',3c') eine zur Stirnfläche des Einschubteiles (3b',3c') hin sowie nach radial innen weisende Schräge (S) aufweist, die bei der Montage mit der ringförmigen Anformung (12) an der Dichtung (11) zusammenwirkt, wobei eine innere Schräge (Si) an der Dichtung (11) die Montage desselben am Einschubteil (3b',3c') das Zurückweichen der Anformung (12) beim Durchstecken durch den Bund (4b',4c') erleichtert.

9. Steckkupplung nach einem der Ansprüche 6 bis 8,
**dadurch gekennzeichnet,**
**dass** die zwischen dem Außendurchmesser des Rohres (2) und dem Innendurchmesser des Bundes (4a,4b,4c,4d,4e) entstehende Ringfläche kleiner ist, als die Ringfläche einer stegförmigen Anbindung (19) der ringförmigen Anformung (12) an der Dichtung (11), um durch das so entstehende Übermaß der stegförmigen Anbindung (19) in der Ringfläche innerhalb des Bundes (4a,4b,4c,4d,4e) eine Verquetschung des gummielastischen Materials der stegförmigen Anbindung (19) zu erreichen.

10. Steckkupplung nach Anspruch 1 oder 2,
**dadurch gekennzeichnet,**
**dass** das Einschubteil (3d,3e) aus einer ersten Hälfte (3d1,3e1) und aus einer zweiten Hälfte (3d2,3e2) besteht, die entlang einer Trennebene parallel zu einer Mittelachse (M) zusammengehalten werden, wobei an die Hälften (3d1,3e1; 3d2,3e2) jeweils eine halbe Ringnut (9) sowie ein halber Bund (4d,4e) mit angeformt sind.

11. Steckkupplung nach Anspruch 10,
**dadurch gekennzeichnet,**
**dass** die Hälften (3d1,3e1;3d2,3e2) um den Zusammenbau des Rohres (2) mit der Dichtung (11) zu kompletten Einschubteilen (3d,3e) zusammengefügt werden.

12. Steckkupplung nach Anspruch 10 oder 11,
**dadurch gekennzeichnet,**
**dass** die erste Hälfte (3d1) mit der zweiten Hälfte (3d2) identisch ist.

13. Steckkupplung nach einem der Ansprüche 10 bis 12,
**dadurch gekennzeichnet,**
**dass** die Hälften (3d1,3d2) durch Halterasten (18) verbunden sind.

14. Steckkupplung nach einem der Ansprüche 10 bis 13,
**dadurch gekennzeichnet,**
**dass** die Hälften (3e1,3e2) miteinander einseitig durch ein Filmscharnier (17) in Verbindung stehen.

## Claims

1. Plug-in coupling having a pipe (2), a push-in part (3), a housing (G) and an elastomeric seal for sealing a pipe (2) in the push-in part (3) relative to a cylindrical interior surface of the housing (G) of said plug-in coupling (1), into which the push-in part (3a, 3b, 3c, 3d, 3e) can be pushed together with the pipe (2), the seal (11) being in prestressed contact with the interior surface of the housing by means of at least one outward-facing annular lip (15) and with the pipe (2) by means of at least one radially inward-facing annular sealing lip (14), wherein the elastomeric seal (11) can be connected by positive fitting to the push-in part (3a, 3b, 3c, 3d, 3e) and an inward-facing annular groove (9) is formed in the push-in part (3a, 3b, 3c, 3d, 3e), into which groove (9) a radially outward-facing annular moulding (12) of the seal (11) engages to form a joint connection with hook-type rear engagement, this positive fit being lockable by the assembly of the pipe (2) to form a non-releasable connection, the pipe (2) having a cylindrical and uninterrupted exterior surface in the region of the seal (11).

2. Plug-in coupling according to Claim 1,
**characterized in that**
a radially inward-facing collar (4a, 4b, 4c, 4d, 4e) is connected to the push-in part (3a, 3b, 3c, 3d, 3e) to form the annular groove (9) and forms an annularly extending first plane face (5a, 5b, 5c, 5d, 5e) which lies opposite a second plane face (6a, 6b, 6c, 6d, 6e) and forms therewith the circumferential, inward-facing annular groove (9).

3. Plug-in coupling according to Claim 1 or 2,
**characterized in that**
the annular groove (9) is formed by an assembly ring (10) which can be connected to the push-in part (3a) and comprises an annularly extending first plane surface (5a) which forms a spacing, corresponding to the width of the annular groove (9), from an end face of the push-in part (3a) as a second annularly extending plane surface (6a), forming an external connection (7a).

4. Plug-in coupling according to Claim 3,
**characterized in that**
the assembly ring (10) is connected to the push-in part (3a) via a snap connection (16).

5. Method of forming a plug-in coupling according to Claim 3,
**characterized by** the following assembly stages:
• joining the seal (11) to an assembly ring (10) by inserting the radially outward-facing annular moulding (12) behind the annularly extending plane surface (5a) of the annular groove (9) to be formed;
• snap-fitting the combination of assembly ring (10) and seal (11) onto the push-in part (3a);
• pushing the pipe (2) into the push-in part (3a) and into the seal (11) in the position envisaged for the pipe (2), but at least as far as the joint position in order to lock the joint connection between the assembly ring (10) and the seal (11).

6. Plug-in coupling according to Claim 1 or 2,
**characterized in that**
the annular groove (9) is formed on the integrally designed push-in part (3b, 3c) by outward-movable moulding slides to form the two annularly extending plane surfaces (5b, 6b; 5c, 6c), a radially outward connection (7b, 7c) of the collar (4b, 4c) being interrupted by at least one gap (8a, 8b).

7. Plug-in coupling according to Claim 6,
**characterized in that**
the collar (4b, 4c) on the push-in part (3b, 3c) has a radius (Ri) facing towards the end face of the push-in part (3b, 3c) and radially inwards which, on assembly, interacts with a radially outward-facing radius (Ra) on the annular moulding (12) on the seal (11).

8. Plug-in coupling according to Claim 6,
**characterized in that**
the collar (4b', 4c') on the push-in part (3b', 3c') possesses an oblique surface (S) facing towards the end face of the push-in part (3b', 3c') and radially inwards which, on the assembly, interacts with the annular moulding (12) on the seal (11), an internal oblique surface (Si) on the seal (11) facilitating the assembly thereof on the push-in part (3b', 3c') as a result of the receding of the moulding (12) when pushed through the collar (4b', 4c').

9. Plug-in coupling according to one of Claims 6 to 8,
**characterized in that**
the annular surface formed between the external surface of the pipe (2) and the internal surface of the collar (4a, 4b, 4c, 4d, 4e) is smaller than the annular surface of a web-shaped connection (19) of the annular moulding (12) on the seal (11), in order, as a result of the consequent excess size of the web-shaped connection (19) in the annular surface within the collar (4a, 4b, 4c, 4d, 4e) to achieve a crushing of the elastomeric material of the web-shaped connection (19).

10. Plug-in coupling according to Claim 1 or 2,
**characterized in that**
the push-in part (3d, 3e) comprises a first half (3d1, 3e1) and a second half (3d2, 3e2) which are held together along a plane of separation parallel to a median axis (M), a half of an annular groove (9) and a half of a collar (4d, 4e) also being moulded with each of the halves (3d1, 3e1; 3d2, 3e2).

11. Plug-in coupling according to Claim 10,
**characterized in that**
the halves (3d1, 3e1; 3d2, 3e2) are jointed together to form complete push-in parts (3d, 3e) in order to assemble the pipe (2) with the seal (11).

12. Plug-in coupling according to Claim 10 or 11,
**characterized in that**
the first half (3d1) is identical to the second half (3d2).

13. Plug-in coupling according to one of Claims 10 to 12,
**characterized in that**
the halves (3d1, 3d2) are connected by retaining latches (18).

14. Plug-in coupling according to one of Claims 10 to 13,
**characterized in that**
the halves (3e1, 3e2) are connected to each other on one side by a film hinge (17).

## Revendications

1. Dispositif d'accouplement enfichable qui comprend un tube (2), une pièce d'insertion (3), un boîtier (G) et un joint élastique d'étanchéité destiné à assurer l'étanchéité entre le tube (2) situé dans la pièce d'insertion (3) et une surface intérieure cylindrique du boîtier (G) de ce dispositif d'accouplement enfichable (1) dans lequel on peut insérer la pièce d'insertion (3a, 3b, 3c, 3d, 3e) en même temps que le tube (2), le joint d'étanchéité (11) étant appliqué sous précontrainte sur la surface intérieure du boîtier par au moins une lèvre annulaire (15) orientée vers l'extérieur et sur le tube (2) par au moins une lèvre d'étanchéité (14) orientée radialement vers l'intérieur, le joint élastique d'étanchéité (11) pouvant être relié en correspondance de forme à la pièce d'insertion (3a, 3b, 3c, 3d, 3e), une rainure annulaire (9) orientée vers l'intérieur étant formée dans la pièce d'insertion (3a, 3b, 3c, 3d, 3e), rainure dans laquelle une moulure annulaire (12) du joint d'étanchéité (11), orientée radialement vers l'extérieur, s'engage au moyen d'un dispositif d'accrochage de type en crochet afin de former une liaison d'assemblage, cette correspondance de forme pouvant être verrouillée par le montage du tube (2) en une liaison indissoluble, le tube (2) présentant, dans la région du joint d'étanchéité (11), un diamètre extérieur cylindrique et non interrompu.

2. Dispositif d'accouplement enfichable selon la revendication 1, **caractérisé en ce que**, pour former la rainure annulaire (9), une collerette (4a, 4b, 4c, 4d, 4e) orientée radialement vers l'intérieur est reliée à la pièce d'insertion (3a, 3b, 3c, 3d, 3e) et forme une première surface transversale (5a, 5b, 5c, 5d, 5e) qui s'étend en forme d'anneau et qui fait face à une deuxième surface transversale (6a, 6b, 6c, 6d, 6e) avec laquelle elle forme la rainure annulaire périphérique (9) orientée vers l'intérieur.

3. Dispositif d'accouplement enfichable selon les revendications 1 ou 2, **caractérisé en ce que** la rainure annulaire (9) est formée par un anneau de montage (10) qui peut être relié à la pièce d'insertion (3a) et qui forme une première surface transversale (5a) qui s'étend en forme d'anneau et qui, en formant une liaison extérieure (7a), forme avec une surface avant de la pièce d'insertion (3a) qui sert de deuxième surface transversale (6a) qui s'étend en forme d'anneau une distance qui correspond à la largeur de la rainure annulaire (9).

4. Dispositif d'accouplement enfichable selon la revendication 3, **caractérisé en ce que** l'anneau de montage (10) est relié à la pièce d'insertion (3a) par une liaison par encliquetage (16).

5. Procédé de formation d'un dispositif d'accouplement enfichable selon la revendication 3, **caractérisé par** les étapes de montage qui consistent à :
- assembler le joint d'étanchéité (11) et un anneau de montage (10) en insérant la moulure annulaire (12) qui s'étend en forme d'anneau et qui est orientée vers l'extérieur derrière la surface transversale (5a) de la rainure annulaire (9),
- engager élastiquement l'ensemble formé par l'anneau de montage (10) et le joint d'étanchéité (11) sur la pièce d'insertion (3a) et
- insérer le tube (2) dans la pièce d'insertion (3a) et dans le joint d'étanchéité (11) dans la position prévue pour le tube (2) au moins jusqu'à l'emplacement d'assemblage pour verrouiller la liaison d'assemblage entre l'anneau de montage (10) et le joint d'étanchéité (11).

6. Dispositif d'accouplement enfichable selon les revendications 1 ou 2, **caractérisé en ce que** sur la pièce d'insertion (3b, 3c) réalisée en une seule pièce, la rainure annulaire (9) est formée par des glissières moulées qui peuvent être déplacées vers l'extérieur pour former les deux surfaces transversales (5b, 6b; 5c, 6c) qui s'étendent en forme d'anneau et **en ce qu'**une liaison radialement extérieure (7b, 7c) de la collerette (4b, 4c) est interrompue par au moins une lacune (8a, 8b).

7. Dispositif d'accouplement enfichable selon la revendication 6, **caractérisé en ce que** la collerette (4b, 4c) située sur la pièce d'insertion (3b, 3c) présente un rayon (Ri) orienté vers la surface avant de la pièce d'insertion (3b, 3c) ainsi que radialement vers l'intérieur et qui, lors du montage, coopère avec un rayon (Ra) orienté radialement vers l'extérieur et situé sur la moulure annulaire (12) du joint d'étanchéité (11).

8. Dispositif d'accouplement enfichable selon la revendication 6, **caractérisé en ce que** la collerette (4b', 4c') située sur la pièce d'insertion (3b', 3c') présente un biseau (S) qui est orienté vers la surface avant de la pièce d'insertion (3b', 3c') ainsi que radialement vers l'intérieur et qui, lors du montage, coopère avec la moulure annulaire (12) située sur le joint d'étanchéité (11), un biseau intérieur (Si) situé sur le joint d'étanchéité (11) facilitant le montage de celui-ci sur la pièce d'insertion (3b', 3c') et facilitant la compression de la moulure (12) lors du passage à travers la collerette (4b', 4c').

9. Dispositif d'accouplement enfichable selon l'une des revendications 6 à 8, **caractérisé en ce que** la surface annulaire qui est créée entre le diamètre extérieur du tube (2) et le diamètre intérieur de la collerette (4a, 4b, 4c, 4d, 4e) est plus petite que la surface annulaire d'une liaison (19) en forme de nervure de la moulure annulaire (12) située sur le joint d'étanchéité (11) afin d'obtenir un écrasement du matériau élastique caoutchouteux de la liaison (19) en forme de nervure grâce au surdimensionnement de la liaison (19) en forme de nervure dans la surface annulaire située à l'intérieur de la nervure (4a, 4b, 4c, 4d, 4e).

10. Dispositif d'accouplement enfichable selon les revendications 1 ou 2, **caractérisé en ce que** la pièce d'insertion (3d, 3e) est constituée d'une première moitié (3d1, 3e1) et d'une deuxième moitié (3d2, 3e2) qui sont maintenues ensemble le long d'un plan de séparation situé parallèlement à un axe médian (M), une demi-rainure annulaire (9) et une demi-nervure (4d, 4e) étant formées sur chacune des moitiés (3d1, 3e1; 3d2, 3e2).

11. Dispositif d'accouplement enfichable selon la revendication 10, **caractérisé en ce que** les moitiés (3d1, 3e1; 3d2, 3e2) sont assemblées en une pièce complète d'insertion (3d, 3e) autour de l'ensemble formé par le tube (2) et le joint d'étanchéité (11).

12. Dispositif d'accouplement enfichable selon les revendications 10 ou 11, **caractérisé en ce que** la première moitié (3d1) et la deuxième moitié (3d2) sont identiques.

13. Dispositif d'accouplement enfichable selon l'une des revendications 10 à 12, **caractérisé en ce que** les moitiés (3d1, 3d2) sont reliées par des cliquets de retenue (18).

14. Dispositif d'accouplement enfichable selon l'une des revendications 10 à 13, **caractérisé en ce que** sur un de leurs côtés, les moitiés (3e1, 3e2) sont reliées l'une à l'autre par une charnière en film (17).
